# EUROPÄISCHE PATENTSCHRIFT

(11) **EP 0 956 253 B1**
(45) Veröffentlichungstag und Bekanntmachung des Hinweises auf die Patenterteilung: **26.01.2005**
(21) Anmeldenummer: 97900533.7
(22) Anmeldetag: 24.01.1997
(51) Int. Cl.: B65G 47/71, B65G 21/20

(54) **VERFAHREN UND VORRICHTUNG ZUR AUFTRENNUNG ODER ZUSAMMENFÜHRUNG VON BEHÄLTERZARGENABFOLGEN**
PROCESS AND DEVICE FOR SEPARATING OR JOINING SEQUENCES OF CONTAINER
PROCEDE ET DISPOSITIF POUR SEPARER OU REUNIR DES SERIES DE CORPS DE CONTENANTS

(30) Priorität: 26.01.1996 CH 20696; 03.05.1996 CH 112196
(43) Veröffentlichungstag der Anmeldung: 17.11.1999
(73) Patentinhaber: ELPATRONIC AG, 8962 Bergdietikon (CH)
(72) Erfinder: FREI, Matthias, CH-5432 Neuenhof (CH); BÄSSLER, Peter, CH-5454 Bellikon (CH); SCHREIBER, Peter, CH-2563 Ipsach (CH); TAIANA, Peter, CH-5053 Staffelbach (CH)
(86) Internationale Anmeldenummer: PCT/CH1997/000021
(87) Internationale Veröffentlichungsnummer: WO 1997/027132

(56) Entgegenhaltungen:
- DE-A- 1 611 843
- DE-U- 9 201 426
- GB-A- 2 114 083

## Beschreibung

### Technisches Gebiet

Die Erfindung betrifft ein Verfahren und eine Vorrichtung zur Auftrennung einer Reihenfolge von Behälterzargen gemäss Oberbegriff des Anspruchs 1 bzw. 5 sowie ein Verfahren und eine Vorrichtung zum Zusammenführen von Behälterzargen gemäss Oberbegriff des Anspruchs 2 bzw. 6.

### Stand der Technik

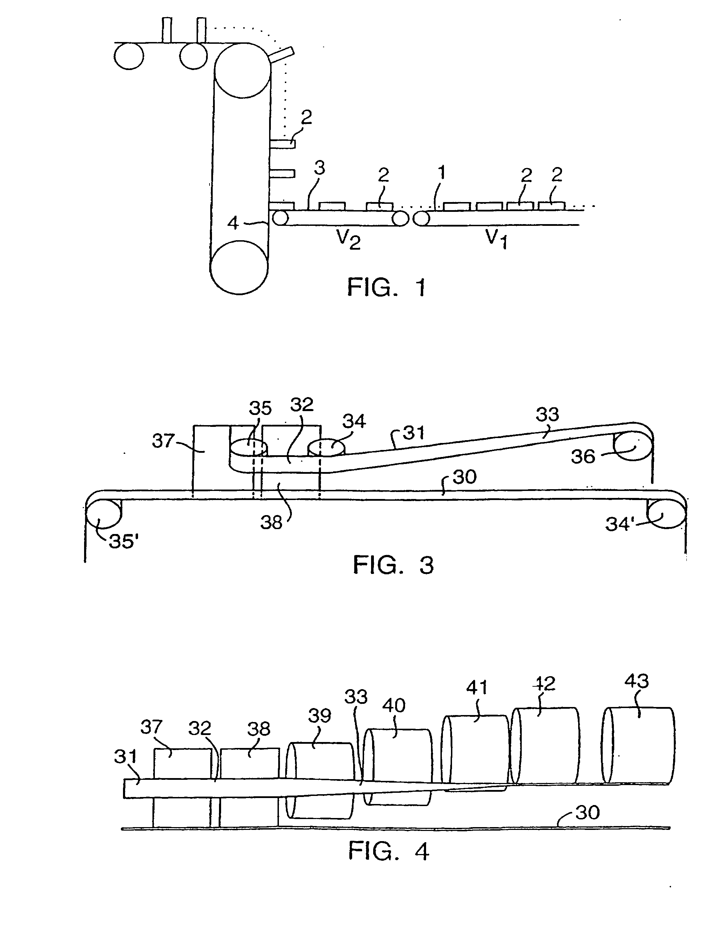

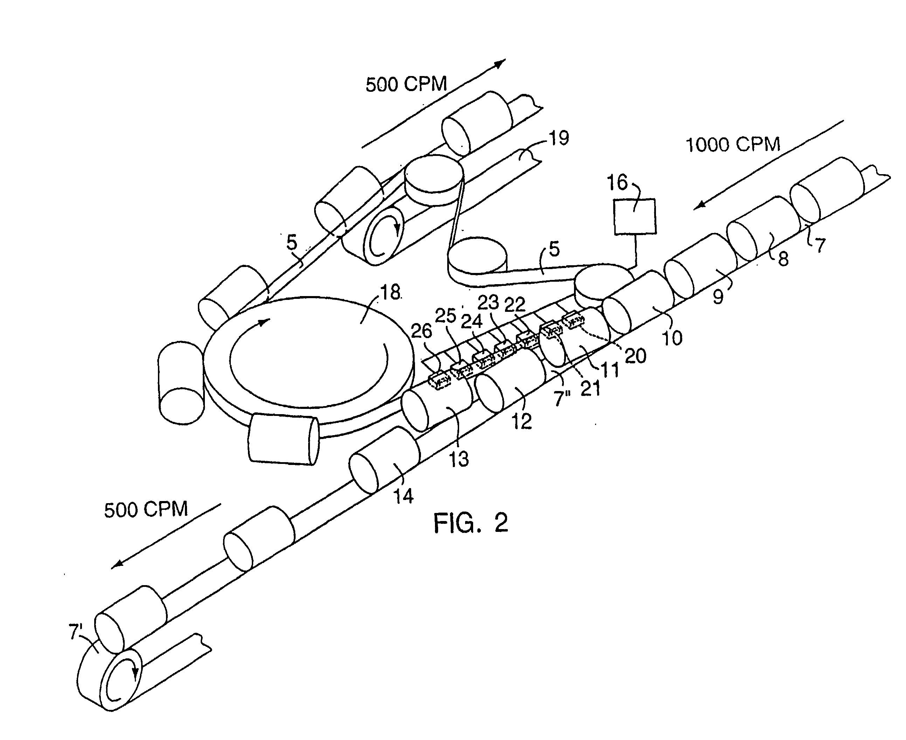

Es ist bekannt, dass Behälterzargen, insbesondere Dosenzargen, auf Förderbändern auf der Mantelfläche der Zarge liegend oder hängend gefördert werden und nachfolgend zur Weiterverarbeitung um 90° gedreht werden müssen, so dass die Dosenzarge stehend weitergefördert wird. Figur 1 zeigt grobschematisch eine Vorrichtung mit der dies bewerkstelligt wird. Auf einem ersten Förderband 1 wird eine Reihe von Dosenzargen 2, von denen nur vier Stück dargestellt sind, mit einer Geschwindigkeit V₁ und einem Abstand zwischen den Dosenzargen von ungefähr 3-4 mm gefördert. Die Dosenzargen werden dabei z.B. durch Permanentmagnete an dem Förderband gehalten. Die Dosenzargen sollen auf ein weiteres Förderband 4 gelangen, an welchem die Dosen aufgestellt werden, um auf bekannte Weise weiterverarbeitet zu werden. Die Dosenzargen können nicht direkt von dem Förderband 1 an das Förderband 4 abgegeben werden, da der Abstand der Dosenzargen so gering ist, dass dabei eine Kollision aufeinanderfolgender Dosenzargen erfolgen würde. Es wird daher ein weiteres Förderband 3 zwischen das Förderband 1 und das Band 4 zwischengeschaltet, das eine Geschwindigkeit V₂ aufweist, die grösser ist als die Geschwindigkeit V₁. Es ergibt sich dadurch die Vergrösserung des Abstandes zwischen den Dosenzargen 2 auf dem Band 3, wie dies in der Figur dargestellt ist. Auf diese Weise besitzt die jeweils an das Förderband 4 gelangende Dose 2 einen genügenden Abstand von der nächst folgenden Dosenzarge, um vom Förderband 4 aufgenommen und weggefördert zu werden, bevor die nächstfolgende Zarge auf das Band 4 auftrifft. Die Anordnung gemäss Figur 1 ist nur grobschematisch und ohne die bekannten Mittel zur Fixierung der Dosenzargen z.B. am Band 4 dargestellt, da solches bekannt ist. Die Dosenzargen werden auf den Förderbändern 1 und 3 vorzugsweise durch Magnetkraft gehalten, wie dies bereits erwähnt worden ist und wie dies ebenfalls bekannt ist.

Da die Maschinen zur Herstellung von Dosenzargen, insbesonders die Rollnahtschweissmaschinen, mit ständig höherer Geschwindigkeit gefahren werden können, ergibt sich das Problem, dass die Geschwindigkeit V₁ bereits sehr hoch ist. Zum Beispiel werden auf dem Transportband 1 1000 Zargen/Minute gefördert, was eine hohe Geschwindigkeit des Transportbandes bedingt. Da die Geschwindigkeit V₂ des Bandes 3 höher sein muss als die Geschwindigkeit V₁, um den Abstand zwischen den Zargen zu vergrössern, ergibt sich für die Geschwindigkeit V₂ eine derart hohe Geschwindigkeit, dass die Uebernahme auf das Transportband 4 problematisch wird, da die Dosenzargen mit hoher Geschwindigkeit auf das Transportband 4 auftreffen. Die US-A-5 423 410 schlägt zur Lösung des Problems eine Auftrennung des Dosenstromes in zwei Ströme vor, wobei zwei parallele, in der selben Ebene liegende Förderbänder verwendet werden. Eine Transfereinrichtung stösst jeweils eine Dosenzarge vom einen Band auf das parallele Band. Dabei muss die Zarge einen relativ weiten Weg zurücklegen und die Uebergabe vom einen auf das andere Band erfolgt schlagartig, was Beschädigungen der Zarge bewirken kann. Es besteht daher einerseits die Aufgabe, ein Verfahren bzw. eine Vorrichtung zu schaffen, mit der auch mit hoher Kadenz geförderte Dosenzargen ohne Probleme auf möglichst sanfte Weise zur Weiterverarbeitung auf zwei oder mehr Bänder aufgeteilt werden können.

Es ist ferner so, dass einige der auf dem Transportband 1 mit hoher Kadenz geförderten Dosenzargen von dem Transportband entnommen werden sollten, wenn diese Dosenzargen aufgrund eines Qualitätskontrollsystems als fehlerhaft erkannt worden sind. Diese Dosen sollten nicht der Weiterverarbeitung zugeführt werden. Bekannt ist es, solche Dosen z.B. durch einen Luftstrahl vom Förderband 1 wegzustossen. Dies bewirkt, dass die weggestossene Dose mit hoher Geschwindigkeit in ungeordneter Weise das Band verlässt. Erfolgt das Ausstossen z.B. vor der Trocknung der Innenbeschichtung der Dosenzargen, so wird durch dieses Ausstossen aus der Förderlinie Beschichtungspulver oder Beschichtungslack in die Umgebung verteilt, was unerwünscht ist. Es besteht daher weiter die Aufgabe, ein Verfahren und eine Vorrichtung zu schaffen, mittels welcher aus der auf einem Förderband 1 geförderten Reihenfolge von Dosen einzelne Dosen in geordneter und möglichst sanfter Weise entnommen werden können. Aus GB-A-2 114 083 ist eine Zargenweiche bekannt, bei der eine Aufteilung des Zargenstromes an einem Knickpunkt eines Transportbandes mittels beidseits angeordneter Elektromagnete erfolgt. Die Zargen werden z.T. an ein weiteres Transportband abgegeben. Dabei wird eine lange Aufteilungsstrecke benötigt.

### Darstellung der Erfindung

Die genannten Aufgaben werden durch ein Verfahren gemäss Anspruch 1 gelöst bzw. durch eine Vorrichtung gemäss Anspruch 5.

Ein zweites Fördermittel wird vorgesehen, welches zunächst nahe dem ersten Fördermittel und nicht in derselben Ebene verläuft und Dosen von diesem übernehmen kann. Das zweite Fördermittel kann auf die genannte Weise die zu übernehmenden Dosenzargen kontaktieren oder fast kontaktieren, so dass praktisch keine Verschiebung der Zargen durch die Krafteinwirkung nötig wird und die Zargen werden durch den sich entfernenden Verlauf des zweiten Fördermittels sukzessive sanft aus ihrer ursprünglichen Reihenfolge entnommen. Die Verdrehung bzw. Umlenkung des einen Transportbandes ergibt eine kurze Auftrennungsstrecke.

Einerseits kann auf diese Weise ein Strom von z.B. 1000 Behälterzargen/Minute auf 2 Ströme von 500 Behälterzargen/Minute aufgeteilt werden, welche jeweils einzeln einem Transportband zur Aufstellung der entsprechenden Dosenzarge zugeführt werden können. Auf diese Weise entfällt die Notwendigkeit eines Transferbandes 3 mit erhöhter Geschwindigkeit. Andererseits können durch das erfindungsgemässe Verfahren bzw. die Vorrichtung einzelne Behälterzargen aus einer Reihenfolge von Behälterzargen in geordneter Weise entnommen werden, so dass bei der Entnahme keine herumfliegenden Zargen und keine Verschmutzung mit Beschichtungspulver oder Beschichtungslack zu befürchten sind.

Auch die umgekehrte Funktion kann erwünscht sein. Aus mehreren Zargenströmen soll ein einziger Zargenstrom gebildet werden. Diese Aufgabe wird mit dem Verfahren nach Anspruch 2 und mit der Vorrichtung nach Anspruch 6 gelöst. Diese Lösung erfolgt nach demselben Prinzip wie bei der Auftrennung.

### Kurze Beschreibung der Zeichnungen

Nachfolgend wird die Erfindung anhand von Ausführungsbeispielen näher erläutert, worin die geschilderten Vorzüge und weitere Vorteile ersichtlich werden. Dabei zeigt
Figur 1 eine Anordnung zum Fördern und Aufstellen von Dosenzargen nach Stand der Technik in grobschematischer Darstellung;
Figur 2 eine schematische perspektivische Darstellung einer ersten Ausführungsform der Erfindung;
Figur 3 eine perspektivische schematische Ansicht einer weiteren Ausführungsform der Erfindung; und
Figur 4 eine Seitenansicht der Ausführungsform gemäss Figur 3.

### Bester Weg zur Ausführung der Erfindung

Figur 1 zeigt wie bereits geschildert eine herkömmliche Lösung zur Förderung einer Reihenfolge von Dosenzargen zu einem Aufstelltransportband 4. Dabei wird die Geschwindigkeit V₁ der Dosenzargen auf dem Transportband 1 durch ein weiteres Transportband 3 auf eine grössere Geschwindigkeit V₂ erhöht, um einen genügenden Abstand zwischen den Dosenzargen 2 zu schaffen. Wie bereits erwähnt ergibt dies Probleme, da bereits die Geschwindigkeit V₁ sehr hoch ist, da z.B. auf dem Transportband 1 1000 Zargen/Minute (CPM, cans per minute) entspricht.

Figur 2 zeigt schematisch und in perspektivischer Darstellung eine erste Ausführungsform gemäss der Erfindung. Dabei ist ein erstes Fördermittel in der Form eines Transportbandes 7 dargestellt, auf welchem eine Reihenfolge von Dosenzargen, z.B. die Dosenzargen 8, 9 und 10 gefördert werden. Die Kadenz dieses Transportbandes kann z.B. die erwähnten 1000 CPM betragen. Die Dosenzargen werden durch Magnete an dem Band gehalten, welche unterhalb des Transportbandes angeordnet sind. Es handelt sich dabei in der Regel um Permanentmagnete. Diese Art der Förderung für aus Blech bestehende Dosenzargen ist bekannt. Im Bereich 7" des Transportbandes 7, in welchem sich in der Darstellung gerade die Dosenzarge 11 befindet, ist nun ein weiteres Fördermittel, welches in dem Beispiel von einem Transportband 5 gebildet ist, an das erste Fördermittel herangeführt. Das Transportband 5 verläuft dabei im rechten Winkel nahe benachbart zum Transportband 7 derart, dass die jeweils im Bereich 7" befindliche Dosenzarge seitlich durch das Transportband 5 berührt wird oder nahezu berührt wird. Nach diesem Bereich bzw. Förderwegabschnitt 7", in dem das Transportband 5 an das erste Fördermittel 7 herangeführt ist, läuft das das zweite Fördermittel bildende Transportband 5 von dem Fördermittel 7 weg, so dass es sich von diesem nach und nach weiter entfernt. Im gezeigten Beispiel verläuft das Transportband 5 dann über eine Umlenkrolle 18 und entfernt sich dabei völlig aus dem Bereich des ersten Fördermittels 7. In demjenigen Bereich, in dem das Transportband 5 an das Transportband 7 herangeführt ist, und auch noch ein Stück im darauffolgenden Bereich, in dem es sich weiter und weiter vom Band 7 entfernt, sind hinter dem Transportband 5 Elektromagnete 20-26 angeordnet, welche einzeln durch eine nur grob schematisch dargestellte Steuereinrichtung 16 ansteuerbar sind. Im weiteren Verlauf des Transportbandes 5 sind hinter diesem wiederum Permanentmagnete angeordnet, welche ein Festhalten der Dosenzargen an dem Transportband 5 erlauben. In demjenigen Bereich, in dem das Transportband 5 nun an das Transportband 7 herangeführt wird, erfolgt eine Uebernahme von Dosenzargen von dem Transportband 7 auf das Transportband 5. In dem gezeigten Beispiel erfolgt dies dadurch, dass die Elektromagnete 20-26 durch die Steuereinrichtung 16 selektiv nacheinander so betätigt werden, dass jeweils die vom Band 7 zu entfernende Dosenzarge durch die Elektromagnete mit einer solchen Kraft angezogen wird, dass die Kraft der Permanentmagnete des Transportbandes 7 überwunden wird. Es erfolgt dadurch eine Uebernahme einzelner Dosen aus der Reihenfolge der Dosen auf dem Transportband 7 auf das Transportband 5. Es können im Bereich 7" auch beim Transportband 7 Elektromagnete anstelle der Permanentmagnete vorgesehen sein, welche ebenfalls durch die Steuereinrichtung 16 gesteuert werden und welche für diejenigen Dosen, die an das Transportband 5 abzugeben sind, deaktiviert werden, um die Uebernahme im Gegensatz zur Verwendung von Permanentmagneten beim Transportband 7 an dieser Stelle zu erleichtern. Die Uebernahme auf das zweite Fördermittel könnte anstelle oder zusätzlich zu den Elektromagneten durch eine pneumatische oder mechanische Einwirkung, also z.B. durch einen Luftstrahl oder einen mechanischen Greifer oder Stössel bewirkt werden. In diesem Fall könnten auch beim zweiten Fördermittel 5 Permanentmagnete anstelle der Elektromagnete vorgesehen sein, da deren Kraftwirkung zusammen mit der pneumatischen oder mechanischen Krafteinwirkung der Zarge vom einen Fördermittel 7 zum anderen Fördermittel 5 übergeben kann. Die beste Art der Uebergabe hängt vor allem davon ab, wie nahe das zweite Fördermittel an die Dosenzargen herangeführt wird. Werden die Zargen durch das Band 5 im gemeinsamen Förderwegabschnitt der Bänder 5 und 7 kontaktiert, so ist eine rein magnetische Uebergabe besonders einfach möglich.

Im gezeigten Beispiel erfolgt die Uebernahme jeder zweiten Dosenzarge vom Transportband 7 auf das Transportband 5. Die auf das Transportband 5 übernommenen Zargen werden nachfolgend auf ein weiteres Transportband 19 abgegeben, welches ebenfalls mit Permanentmagneten zum Halten der Dosenzargen versehen ist. Bei dieser beispielshaft dargestellten Betriebsweise wird also aus der Reihenfolge von Dosenzargen die auf dem Band 7 mit einer Kadenz von 1000 CPM gefördert werden, jeweils eine erste Abfolge von Zargen gebildet, die auf dem Band 7 verbleibt und eine zweite Abfolge von Dosenzargen, die auf das Band 19 gelangt. Ersichtlich ist, dass die jeweilige Abfolge von Dosenzargen nur noch eine Kadenz von 500 CPM aufweist und einen grösseren Abstand zwischen den jeweiligen Zargen. Die Geschwindigkeit der Transportbänder wird dabei nicht erhöht, d.h. die Abfolge von 500 CPM am Ausgang des Bandes 7 läuft mit der Geschwindigkeit Vi des Transportbandes 7 und nicht mit einer erhöhten Geschwindigkeit V₂, wie dies nach Stand der Technik bei der Anordnung von Figur 1 erfolgt. Da die Zargen weit genug voneinander beabstandet sind, kann nun im Endbereich 7' des Transportbandes 7 ein Aufstellband gemäss dem Aufstellband 4 von Figur 1 ohne weiteres angeordnet werden. Die Dosenabfolge von 500 CPM erlaubt dies ohne weiteres und die relativ geringe Geschwindigkeit V₁ ermöglicht eine problemlose Uebernahme der liegend angeordneten Dosenzargen auf das Aufstellband 4. Auf dieselbe Weise kann im nicht dargestellten Endbereich des Bandes 19 ein weiteres Aufstelltransportband 4 angeordnet werden, welches auch diese Dosenabfolge von 500 CPM entsprechend weiter bearbeitet. Durch das gezeigte Beispiel ist es also möglich, die Reihenfolge von Dosen auf dem Transportband in zweite getrennte Abfolgen von Dosenzargen aufzutrennen, welche jeweils mit derselben Geschwindigkeit wie das Transportband 7 laufen.

Ein weiteres Fördermittel könnte auf der anderen Seite des Transportbandes 7 vorgesehen sein, womit drei getrennte Abfolgen gebildet werden könnten. Wenn oberhalb des Transportbandes 7 ein weiteres solches Fördermittel vorgesehen wäre, so könnten aus der Reihenfolge vier Abfolgen gebildet werden. Die Förderebene bzw. bei Transportbändern die Ebenen der Bandoberflächen liegen dabei nicht in einer gemeinsamen Ebene bzw. fallen nicht zusammen, sondern schneiden sich oder liegen im Falle des oberhalb angeordneten Bandes parallel zueinander.

Anstelle der dargestellten Betriebsweise, bei der jeweils jede zweite Dosenzarge aus dem Dosenstrom von 1000 CPM entnommen wird, könnte das zweite Fördermittel gebildet durch das Transportband 5 auch dazu vorgesehen sein, nur diejenigen Dosenzargen zu übernehmen, die aufgrund einer vorgängigen Qualitätskontrolle als fehlerhaft und auszuscheiden erkannt worden sind. Die Steuereinrichtung 16 wird in diesem Fall einen entsprechenden Befehl von einer Qualitätsüberwachungseinrichtung erhalten und mittels der Elektromagnete 20-26 nur bestimmte einzelne Dosen auf das Transportband übernehmen. Durch das Transportband 5 bzw. 19 können diese Dosen dann geordnet in einen geschlossenen Sammelbehälter geführt werden. Wenn die Dosenreihenfolge, aus welcher nur einzelne Dosen entnommen worden sind, mit dem Transportband 7 auf ein Aufstellband 4 geführt werden soll, kann sich an die erste geschilderte Entnahmeeinrichtung für Einzeldosen eine zweite solche Anordnung anschliessen, welche wie in der Figur 2 gezeigt jede zweite Dose des verbliebenen Dosenstromes entnimmt, um für eine Aufstelleinrichtung mit einem Transportband 4 gemäss Figur 1 wiederum geeignete Verhältnisse zu schaffen.

Figur 3 zeigt in grob schematischer perspektivischer Darstellung eine weitere Ausführungsform der Erfindung. Dabei sind nur zwei Dosenzargen 37 und 38 durch deren Umrisse angedeutet, so das die Betrachtung auch dahinter liegender Elemente möglich ist. In Figur 3 ist wiederum ein erstes Fördermittel 30 ersichtlich, auf dem eine Reihenfolge von Behälterzargen gefördert wird. Ein zweites Fördermittel 31 ebenfalls in der Form eines Förderbandes ist in demjenigen Bereich, wo die beiden Dosenzargen 37 und 38 umrissartig dargestellt sind, an das Band 30 herangeführt, so dass dieses Band 31 ebenfalls die Dosenzargen berühren kann oder sehr nahe von diesen beabstandet verläuft. Das Band 31 verläuft in diesem Bereich senkrecht zum Band 30 bzw. die Achsen der Führungsrollen 35 und 34 in diesem Bereich verlaufen senkrecht zu den Achsen der Führungsrollen 34' und 35' des Bandes 30. Nach demjenigen Bereich, in dem das Band 31 an das Band 30 herangeführt worden ist, welcher Bereich mit 32 bezeichnet ist, verläuft das Band 31 so, dass es vom Band 30 weggeführt wird und zudem gegenüber seinem Verlauf im Bereich 32 verdreht wird. Dies ist im Bereich 33 erkennbar und dadurch, dass die Achse der folgenden Umlenkrolle 36 des Bandes 31 nunmehr ungefähr parallel zur Achse der Umlenkrolle 34' des Bandes 30 verläuft. Es ergibt sich dadurch für diejenigen Dosenzargen, die an das Band 31 angekoppelt worden sind, eine Wegführung vom Band 30 durch seitliche Entfernung von demselben und zugleich durch eine Drehbewegung durch Verdrehung des Bandes. Das Halten der Dosenzargen an den Bändern 30 und 31 erfolgt wiederum wie an sich bekannt vorzugweise durch Permanentmagnete und im Uebernahmebereich 32 durch gesteuerte Elektromagnete, welche in der schematischen Darstellung von Figur 3 indes nicht gezeigt sind. Figur 4 zeigt eine Seitenansicht der Vorrichtung von Figur 3 in ebenfalls grob schematischer Form. Dabei ist erneut das Band 30 ersichtlich und das im rechten Winkel dazu verlaufende Band 31, das an das Band 30 herangeführt ist. Nach dem Bereich 32, in welchem die Dosenzargen an das Band 31 übernommen werden können, erfolgt eine Wegführung der übernommenen Dosenzargen und eine Drehbewegung derselben, wie durch die Dosenzargenabbildungen 39, 40, 41, 42 und 43 schematisch dargestellt ist.

Auch die Anordnung gemäss Figur 3 bzw. Figur 4 kann so verwendet werden, dass die auf den Bändern 30 bzw. 31 geförderten Abfolgen von Dosenzargen nachfolgend bzw. bei den Umlenkrollen 36 und 34' an ein aufwärts verlaufendes Transportband 4 abgegeben werden, wie dies in Figur 1 grundsätzlich gezeigt ist. Es kann auch die andere Betriebsart vorgesehen sein, wonach nur einzelne der Dosen auf das Band 31 übernommen werden und von diesem Band in einen Behälter für nicht verwendbare Dosen abgeführt werden, wie dies bereits vorstehend beim vorhergehenden Ausführungsbeispiel erläutert worden ist.

## Patentansprüche

1. Verfahren zur Auftrennung einer Reihenfolge von Behälterzargen (8-14; 37-43), die auf einem Fördermittel (7;30) gefördert werden, in mindestens zwei getrennte Abfolgen von Behälterzargen, bei dem mindestens ein zweites Fördermittel (5;31), das mit im wesentlichen derselben Geschwindigkeit betrieben wird wie das erste Fördermittel, entlang eines Förderwegabschnittes (7", 32) des ersten Fördermittels an das erste Fördermittel herangeführt wird und nachfolgend von diesem sich entfernend verläuft, wobei die Förderebene des einen Fördermittels mindestens im Förderwegabschnitt nicht mit der Förderebene des anderen Fördermittels zusammenfällt und wobei mittels einer steuerbaren Krafteinwirkung einzelne Zargen vom ersten Fördermittel zum zweiten Fördermittel übergeben werden, an welchem diese Zargen festgehalten und durch den vom ersten Fördermittel sich entfernenden Verlauf des zweiten Fördermittels sukzessive aus der Reihenfolge entfernt werden, wobei als Fördermittel Transportbänder verwendet werden, an welchen metallene Zargen magnetisch festgehalten werden, **dadurch gekennzeichnet, dass** als zweites Fördermittel (31) ein Transportband vorgesehen ist, das nach dem Förderwegabschnitt (7", 32) gegenüber der dort eingenommenen Lage verdreht wird, oder dass als zweites Fördermittel (5) ein Transportband vorgesehen ist, das nach dem Förderwegabschnitt (7", 32) zusammen mit den daran gehaltenen Zargen um eine Umlenkrolle (18) herum umgelenkt wird.

2. Verfahren zur Zusammenführung mindestens zweier getrennter Abfolgen von Behälterzargen (8-14; 37-43), die auf mindestens zwei Fördermitteln (5,7; 30,31) gefördert werden, zu einer Reihenfolge von Behälterzargen, bei dem das eine Fördermittel entlang eines Förderwegabschnittes (7", 32) an das andere Fördermittel herangeführt wird, wobei die Förderebene des einen Fördermittels mindestens im Förderwegabschnitt nicht mit der Förderebene des anderen Fördermittels zusammenfällt und wobei mittels einer steuerbaren Krafteinwirkung einzelne Zargen von dem einen Fördermittel zum anderen Fördermittel übergeben werden, an welchem diese Zargen festgehalten werden, wobei als Fördermittel Transportbänder verwendet werden, an welchen metallene Zargen magnetisch festgehalten werden, **dadurch gekennzeichnet, dass** als zweites Fördermittel (31) ein Transportband vorgesehen ist, das vor dem Förderwegabschnitt (7", 32) gegenüber der dort eingenommenen Lage verdreht ist, oder dass als zweites Fördermittel (5) ein Transportband vorgesehen ist, das vor dem Förderwegabschnitt (7", 32) zusammen mit den daran gehaltenen Zargen um eine Umlenkrolle (18) herum umgelenkt wird.

3. Verfahren nach Anspruch 1 oder 2, **dadurch gekennzeichnet, dass** die Krafteinwirkung auf die Zarge permanentmagnetisch und/oder elektromagnetisch erfolgt.

4. Verfahren nach Anspruch 3, **dadurch gekennzeichnet, dass** die Uebergabe vom ersten zum zweiten Fördermittel durch eine mechanische oder pneumatische Krafteinwirkung auf die Zarge unterstützt wird.

5. Vorrichtung zur Auftrennung einer Reihenfolge von Behälterzargen (8-14; 37-43), mit einem ersten Fördermittel (7;30) zur Förderung der Reihenfolge von Zargen, einem zweiten Fördermittel (5;31), das entlang eines Förderwegabschnittes (7", 32) benachbart zum ersten Fördermittel und nach diesem Abschnitt vom ersten Fördermittel sich entfernend verläuft, wobei die Förderebene des einen Fördermittels mindestens im Förderwegabschnitt nicht mit der Förderebene des anderen Fördermittels zusammenfällt und mit einer steuerbaren Uebergabeeinrichtung (16, 22-26), durch welche einzelne Zargen vom ersten Fördermittel zum zweiten Fördermittel bewegbar sind, wobei die Fördermittel von Förderbändern gebildet werden, an welchen Magnete zum Festhalten der Zargen angeordnet sind, **dadurch gekennzeichnet, dass** als zweites Fördermittel (31) ein Transportband vorgesehen ist, das nach dem Förderwegabschnitt (7", 32) gegenüber der dort eingenommenen Lage verdreht wird, oder dass als zweites Fördermittel (5) ein Transportband vorgesehen ist, das nach dem Förderwegabschnitt zusammen mit den daran gehaltenen Zargen um eine Umlenkrolle (18) herum umgelenkt wird.

6. Vorrichtung zur Zusammenführung mindestens zweier getrennter Abfolgen von Behälterzargen (8-14; 37-43), die auf mindestens zwei Fördermitteln (5,7; 30,31) gefördert werden, zu einer Reihenfolge von Behälterzargen, bei der das eine Fördermittel entlang eines Förderwegabschnittes (7", 32) an das andere Fördermittel herangeführt ist und wobei die Förderebene des einen Fördermittels mindestens im Förderwegabschnitt nicht mit der Förderebene des anderen Fördermittels zusammenfällt und bei der eine steuerbare Uebergabeeinrichtung vorgesehen ist, durch welche einzelne Zargen von dem einen Fördermittel zu dem anderen Fördermittel bewegbar sind, wobei die Fördermittel von Förderbändern gebildet werden, an welchen Magnete zum Festhalten der Zargen angeordnet sind, **dadurch gekennzeichnet, dass** als zweites Fördermittel (31) ein Transportband vorgesehen ist, das vor dem Förderwegabschnitt (7", 32) gegenüber der dort eingenommenen Lage verdreht ist, oder dass als zweites Fördermittel (5) ein Transportband vorgesehen ist, das vor dem Förderwegabschnitt (7", 32) zusammen mit den daran gehaltenen Zargen um eine Umlenkrolle (18) herum umgelenkt wird.

7. Vorrichtung nach Anspruch 5 oder 6, **dadurch gekennzeichnet, dass** die Uebergabeeinrichtung als magnetisch auf die Zargen einwirkende Einrichtung ausgestaltet ist.

8. Vorrichtung nach Anspruch 7, **dadurch gekennzeichnet, dass** zusätzlich zur Uebergabeeinrichtung eine mechanisch oder pneumatisch auf die Zargen einwirkende Einrichtung vorgesehen ist.

## Claims

1. Method for separating a series of container bodies (8-14; 37-43) transported on a conveyor means (7; 30) into at least two separate series of container bodies, wherein at least one second conveyor means (5; 31) operated at substantially the same speed as the first conveyor means is made to pass close to the first conveyor means along a section of conveyor path (7", 32) of the first conveyor means and then to diverge therefrom, wherein the conveying plane of one conveyor means does not coincide with the conveying plane of the other conveyor means at least in the said section of conveyor path, and [*sic*] wherein by means of a controllable application of force individual bodies are transferred from the first conveyor means to the second conveyor means, on which these bodies are held and are gradually removed from the series by the divergence of the second conveyor means from the first conveyor means, [and] wherein conveyor belts on which metal bodies are held magnetically are used as conveyor means,
**characterized in that** a conveyor belt which is twisted downstream of the said section of conveyor path (7", 32) with respect to its orientation in the said section is provided as second conveyor means (31); or a conveyor belt which together with the bodies held thereon is diverted around a deflection pulley (18) downstream of the said section of conveyor path (7", 32) is provided as second conveyor means (5).

2. Method for merging at least two separate series of container bodies (8-14; 37-43) transported on at least two conveyor means (5, 7; 30, 31) into one series of container bodies, wherein one conveyor means is made to pass close to the other conveyor means along a section of conveyor path (7", 32), wherein the conveying plane of one conveyor means does not coincide with the conveying plane of the other conveyor means at least in the said section of conveyor path, and [*sic*] wherein by means of a controllable application of force individual bodies are transferred from one conveyor means to the other conveyor means, on which these bodies are held, [and] wherein conveyor belts on which metal bodies are held magnetically are used as conveyor means, **characterized in that** a conveyor belt which is twisted upstream of the said section of conveyor path (7", 32) with respect to its orientation in the said section is provided as second conveyor means (31); or a conveyor belt which together with the bodies held thereon is diverted around a deflection pulley (18) upstream of the said section of conveyor path (7", 32) is provided as second conveyor means (5).

3. Method according to Claim 1 or Claim 2, **characterized in that** force is applied to the body by means of permanent magnets and/or electromagnets.

4. Method according to Claim 3, **characterized in that** transfer from the first conveyor means to the second conveyor means is assisted by application of mechanical or pneumatic force to the body.

5. Apparatus for separating a series of container bodies (8-14; 37-43) with a first conveyor means (7; 30) for transporting the series of bodies, [with] a second conveyor means (5; 31) which extends adjacent to the first conveyor means along a section of conveyor path (7", 32) and diverges from the first conveyor means downstream of the said section, such that the conveying plane of one conveyor means does not coincide with the conveying plane of the other conveyor means at least in the said section of conveyor path, and with a controllable transfer device (16, 22-26) for shifting individual bodies from the first conveyor means to the second conveyor means, wherein the conveyor means are formed by conveyor belts on which magnets for holding the bodies are arranged, **characterized in that** a conveyor belt which is twisted downstream of the said section of conveyor path (7", 32) with respect to its orientation in the said section is provided as second conveyor means (31); or a conveyor belt which together with the bodies held thereon is diverted around a deflection pulley (18) downstream of the said section of conveyor path is provided as second conveyor means (5).

6. Apparatus for merging at least two separate series of container bodies (8-14; 37-43) transported on at least two conveyor means (5, 7; 30, 31) into one series of container bodies, wherein one conveyor means is made to pass close to the other conveyor means along a section of conveyor path (7", 32), and [*sic*] wherein the conveying plane of one conveyor means does not coincide with the conveying plane of the other conveyor means at least in the said section of conveyor path, and [sic] wherein which a controllable transfer device is provided for shifting individual bodies from one conveyor means to the other conveyor means, [and] wherein the conveyor means are formed by conveyor belts on which magnets for holding the bodies are arranged, **characterized in that** a conveyor belt which is twisted upstream of the said section of conveyor path (7", 32) with respect to its orientation in the said section is provided as second conveyor means (31); or a conveyor belt which together with the bodies held thereon is diverted around a deflection pulley (18) upstream of the said section of conveyor path (7", 32) is provided as second conveyor means (5).

7. Apparatus according to Claim 5 or Claim 6, **characterized in that** the transfer device is configured as a device acting magnetically on the bodies.

8. Apparatus according to Claim 7, **characterized in that**, in addition to the transfer device, a device acting mechanically or pneumatically on the bodies is provided.

## Revendications

1. Procédé pour séparer une série de boîtes (8-14; 37-43) pour récipients, qui sont entraînées sur un moyen de transport (7;30), en au moins deux suites séparées de boîtes pour récipients, selon lequel au moins un second moyen de transport (5;31), qui est entraîné essentiellement à la même vitesse que le premier moyen de transport, est rapproché du premier moyen de transport le long d'une section (7",32) du trajet de transport du premier moyen de transport et ensuite en étant déplacé en s'éloignant de ce dernier, le plan de transport d'un moyen de transport ne coïncidant pas, au moins dans la section de déplacement de transport, avec le plan de déplacement de l'autre moyen de transport et selon lequel des boîtes individuelles sont transférées au moyen d'une action de force commandable depuis le premier moyen de transport au second moyen de transport, sur lequel ces boîtes sont retenues fixes et sont écartées successivement de la série de boîtes par l'allure de la trajectoire du second moyen de transport, qui s'écarte du premier moyen de transport, et selon lequel on utilise comme moyens de transport, des bandes transporteuses sur lesquelles des boîtes métalliques sont maintenues magnétiquement de façon fixe, **caractérisé en ce qu'**il est prévu comme second moyen de transport (31) une bande transporteuse, qui, après la section (7",32) de trajet de déplacement, pivote par rapport à la position occupée en cet endroit, ou qu'il est prévu comme second moyen de transport (5) une bande transporteuse qui, après la section (7",32) de trajet de déplacement, est déviée conjointement avec les boîtes retenues sur cette bande, autour d'un rouleau de renvoi (18).

2. Procédé pour rassembler au moins deux séries séparées de boîtes (8-14; 37-43) de récipients, qui sont entraînées sur au moins deux moyens de transport (5,7; 30, 31) pour former une série de boîtes pour récipients, selon lequel un moyen de transport est rapproché de l'autre moyen de transport le long d'une section (7",32) de trajet de transport, selon lequel le plan de transport d'un moyen de transport ne coïncide pas, au moins dans la section de trajet de transport, avec le plan de transport de l'autre moyen de transport, et selon lequel les boîtes individuelles sont transférées à l'aide d'une action de force commandable, d'un moyen de transport à l'autre moyen de transport sur lequel ces boîtes sont retenues de façon fixe, et selon lequel on utilise comme moyen de transport des bandes transporteuses, sur lesquelles des boîtes métalliques sont retenues magnétiquement de façon fixe, **caractérisé en ce qu'**il est prévu comme second moyen d'entraînement (31) une bande transporteuse qui, en amont de la section (7",32) de transport, est amenée à pivoter par rapport à la position prise dans cette section, ou qu'il est prévu en tant que second moyen de transport (5) une bande transporteuse, qui, en amont de la section (7",32) du trajet de transport, est déviée, conjointement avec les boîtes qui sont retenues sur cette bande, autour d'un rouleau de renvoi (18).

3. Procédé selon la revendication 1 ou 2, **caractérisé en ce que** l'action de force agit sur les boîtes par effet magnétique d'aimant permanent ou par effet électromagnétique.

4. Procédé selon la revendication 3, **caractérisé en ce que** le transfert depuis le premier moyen de transport vers le second moyen de transport est assisté par une action de force mécanique ou pneumatique appliquée aux boîtes.

5. Dispositif pour séparer une série de boîtes (8-14; 37-43) pour récipients, comportant un premier moyen de transport (7;30) pour transporter la série de boîtes, un second moyen de transport (5;31) qui, le long d'une section (7",32) du trajet de transport, se déplace au voisinage du premier moyen de transport et, en aval de cette section, s'écarte du premier moyen de transport, et dans lequel le plan de transport d'un moyen de transport ne coïncide pas, au moins dans la section de trajet de transport, avec le plan de transport de l'autre moyen de transport, et comportant une unité de transfert commandable (16,22-26), à l'aide de laquelle des boîtes individuelles peuvent être déplacées du premier moyen de transport vers le second moyen de transport, les moyens de transport étant formés par des bandes transporteuses, sur lesquelles sont disposés des aimants servant à retenir de façon fixe les boîtes, **caractérisé en ce qu'**il est prévu comme second moyen de transport (31) une bande transporteuse, qui, après la section (7",32) de trajet de déplacement, pivote par rapport à la position occupée, ou qu'il est prévu comme second moyen de transport (5) une bande transporteuse qui, après la section de trajet de déplacement, est déviée conjointement avec les boîtes retenues sur cette bande, autour d'un rouleau de renvoi (18).

6. Dispositif pour réunir au moins deux séries séparées de boîtes (8-14; 37-43) de récipients, qui sont entraînées sur au moins deux moyens de transport (5,7; 30, 31) pour former une série de boîtes pour récipients, dans lequel un moyen de transport est rapproché de l'autre moyen de transport le long d'une section (7",32) de trajet de transport, dans lequel le plan de transport d'un moyen de transport ne coïncide pas, au moins dans la section de trajet de transport, avec le plan de transport de l'autre moyen de transport, et dans lequel les boîtes individuelles sont transférées à l'aide d'une action de force commandable, d'un moyen de transport à l'autre moyen de transport sur lequel ces boîtes sont retenues de façon fixe, et dans lequel on utilise comme moyen de transport des bandes transporteuses, sur lesquelles des boîtes métalliques sont retenues magnétiquement de façon fixe, **caractérisé en ce qu'**il est prévu comme second moyen d'entraînement (31) une bande transporteuse qui, en amont de la section (7",32) de transport, est amenée à pivoter par rapport à la position prise dans cette section, ou qu'il est prévu en tant que second moyen de transport (5) une bande transporteuse, qui, en amont de la section (7",32) du trajet de transport, est déviée, conjointement avec les boîtes qui sont retenues sur cette bande, autour d'un rouleau de renvoi (18).

7. Dispositif selon la revendication 5 ou 6, **caractérisé en ce que** le dispositif de transfert est agencé sous la forme d'un dispositif qui agit magnétiquement sur les boîtes.

8. Dispositif selon la revendication 7, **caractérisé en ce qu'**il est prévu, en plus du dispositif de transfert, un dispositif agissant mécaniquement ou pneumatiquement sur les boîtes.
